(19) Europäisches Patentamt
European Patent Office
Office européen des brevets

(11) Veröffentlichungsnummer: **0 443 984 B1**

(12) **EUROPÄISCHE PATENTSCHRIFT**

(45) Veröffentlichungstag der Patentschrift: **18.01.95**

(51) Int. Cl.[6]: **C09B 29/01**, C09B 43/42, D06P 1/18, D06P 3/54

(21) Anmeldenummer: **91810099.1**

(22) Anmeldetag: **12.02.91**

(54) **Phthalimidyl-Azofarbstoffe.**

(30) Priorität: **19.02.90 CH 519/90**

(43) Veröffentlichungstag der Anmeldung: **28.08.91 Patentblatt 91/35**

(45) Bekanntmachung des Hinweises auf die Patenterteilung: **18.01.95 Patentblatt 95/03**

(84) Benannte Vertragsstaaten: **CH DE FR GB IT LI**

(56) Entgegenhaltungen:
**GB-A- 1 504 795**
**GB-A- 2 016 029**

(73) Patentinhaber: **CIBA-GEIGY AG**
**Klybeckstrasse 141**
**CH-4002 Basel (CH)**

(72) Erfinder: **Trottmann, Martin, Dr.**
**Stefanstrasse 52**
**CH-4106 Therwil (CH)**

**EP 0 443 984 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind Dispersionsfarbstoffe, Verfahren zu deren Herstellung sowie ihre Verwendung zum Färben von Textilmaterialien.

Aus der GB-A- 2 016 029 ist ein Verfahren zur Herstellung CN-gruppenhaltiger Verbindungen bekannt, wobei ein Chloratom durch Umsetzung mit CuCN gegen die CN-Gruppe ausgetauscht wird.

Die erfindungsgemässen Farbstoffe entsprechen der Formel

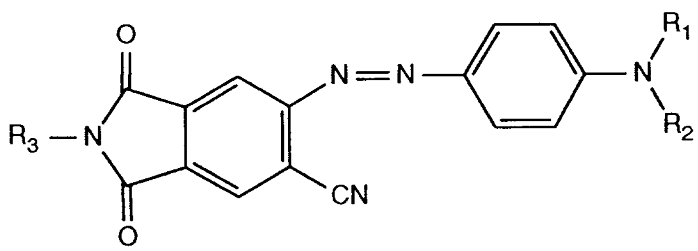

(1)

worin

$R_1$ einen $C_2$-$C_8$-Alkylrest bedeutet, der durch Hydroxy, Halogen, einen Rest -X-$C_1$-$C_8$-Alkyl oder -X-Phenyl substituiert ist, wobei X ein Brückenglied der Formel -O-,

$$-O-\underset{\underset{O}{\|}}{C}- \quad , \quad -O-\underset{\underset{O}{\|}}{C}-O- \quad , \quad -\underset{\underset{O}{\|}}{C}-O- \quad \text{oder} \quad -O-\underset{\underset{O}{\|}}{C}-NH-$$

ist, und

$R_2$ und $R_3$ unabhängig voneinander je einen unsubstituierten $C_1$-$C_8$-Alkylrest oder einen $C_2$-$C_8$-Alkylrest, der wie für $R_1$ angegeben substituiert ist, bedeuten oder worin

$R_1$ und $R_2$ zusammen mit dem sie verbindenden Stickstoffatom einen heterocyclischen Rest darstellen.

Falls $R_2$ oder $R_3$ einen unsubstituierten Alkylrest bedeuten, so kann dieser geradkettig oder verzweigt oder auch cyclisch sein. In Frage kommen z.B. Methyl, Ethyl, n- oder iso-Propyl, n-, iso-, sec- oder tert.-Butyl, geradkettiges oder verzweigtes Pentyl, Hexyl, Heptyl oder Octyl, Cyclopentyl oder Cyclohexyl. Bevorzugt unter diesen sind $C_1$-$C_4$-Alkylreste, vor allem Methyl oder Ethyl.

Stellen $R_1$, $R_2$ oder $R_3$ einen durch Hydroxy, Halogen, -X-$C_1$-$C_8$-Alkyl oder - X-Phenyl substituierten $C_2$-$C_8$-Alkylrest dar, so kann dieser $C_2$-$C_8$-Alkylrest ebenso wie der -X-$C_1$-$C_8$-Alkylrest geradkettig, verzweigt oder cyclisch sein. In Frage kommen die vorstehend aufgeführten Alkylreste.

Unter diesen sind $C_2$-$C_4$-Alkylreste, die durch Hydroxy, Chlor oder einen -X-$C_1$-$C_4$-Alkylrest substituiert sind, bevorzugt, wobei X ein Brückenglied der Formel -O-,

$$-O-\underset{\underset{O}{\|}}{C}- \quad , \quad -O-\underset{\underset{O}{\|}}{C}-O- \quad \text{oder} \quad -\underset{\underset{O}{\|}}{C}-O-$$

bedeutet. Ganz besonders bevorzugte Brückenglieder X entsprechen der Formel

$$-O-\underset{\underset{O}{\|}}{C}- \quad \text{oder} \quad -\underset{\underset{O}{\|}}{C}-O- \; .$$

$R_1$ und $R_2$ können auch zusammen mit dem sie verbindenden Stickstoffatom einen heterocyclischen Rest darstellen, beispielsweise einen Pyrrolidin-, Piperidin-, Morpholin- oder Piperazinrest.

Halogen bedeutet z.B. Fluor, Brom oder vor allem Chlor.

Die Reste $R_1$, $R_2$ und $R_3$ können ein- oder mehrfach durch die angegebenen Substituenten substituiert sein.

Beispiele für geeignete substituierte $C_2$-$C_8$-Alkylreste sind Hydroxyethyl, Hydroxypropyl, Chlorethyl, Methoxyethyl, Ethoxypropyl, Methoxycarbonylethyl, Ethoxycarbonylethyl, Acetoxyethyl, Propionyloxyethyl, Methoxycarbonyloxyethyl, Ethoxycarbonyloxyethyl, Butylaminocarbonyloxyethyl oder Chlorethylaminocarbonyloxyethyl.

Falls $R_1$, $R_2$ oder $R_3$ einen durch -X-Phenyl substituierten Alkylrest darstellen, kann der Phenylrest substituiert sein, z.B. durch $C_1$-$C_4$-Alkyl, $C_1$-$C_4$-Alkoxy oder Halogen.

Besonders geeignete erfindungsgemässe Farbstoffe entsprechen der Formel (1), worin $R_2$ und $R_3$ unabhängig voneinander je einen unsubstituierten $C_1$-$C_4$-Alkylrest oder einen $C_2$-$C_4$-Alkylrest bedeutet, der durch Hydroxy, Chlor oder einen Rest -X-$C_1$-$C_4$-Alkyl substituiert ist, wobei X ein Brückenglied der Formel -O-,

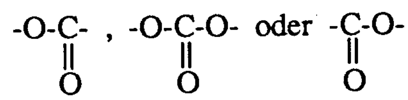

ist.

Von diesen sind solche besonders bevorzugt, worin $R_2$ und $R_3$ unabhängig voneinander je Methyl, Ethyl, Hydroxyethyl oder $C_2$-$C_4$-Alkyl bedeutet, das durch einen Rest -X-$C_1$-$C_4$-Alkyl substituiert ist, worin X ein Brückenglied der Formel

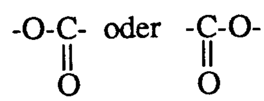

ist.

Eine bevorzugte Ausführungsform der Erfindung betrifft Azofarbstoffe der Formel (1), worin $R_1$ einen $C_2$-$C_4$-Alkylrest bedeutet, der durch Hydroxy, Chlor oder einen Rest -X-$C_1$-$C_4$-Alkyl substituiert ist, wobei X ein Brückenglied der Formel -O-,

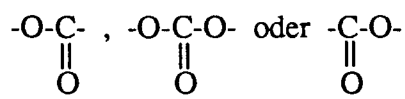

ist und $R_2$ und $R_3$ unabhängig voneinander je Methyl, Ethyl, Hydroxyethyl oder $C_2$-$C_4$-Alkyl bedeutet, das durch einen Rest -X-$C_1$-$C_4$-Alkyl substituiert ist, worin X ein Brückenglied der Formel

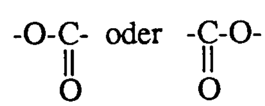

ist.

Die erfindungsgemässen Farbstoffe werden auf an sich bekannte Art und Weise hergestellt, beispielsweise indem man in einer Verbindung der Formel

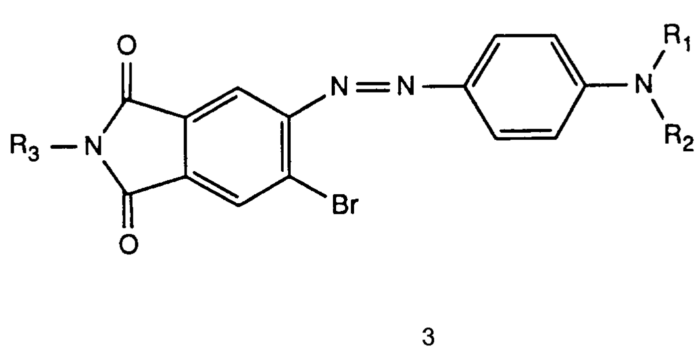

(2)

worin $R_1$, $R_2$ und $R_3$ die unter der Formel (1) angegebenen Bedeutungen aufweisen, Br gegen CN austauscht. Der Cyanaustausch erfolgt unter an sich bekannten Bedingungen, beispielsweise durch Umsetzung einer Verbindung der Formel (2) mit Metallcyaniden, vorzugsweise CuCN, in organischem Medium bei Temperaturen von 20 bis 220 °C.

Die Verbindungen der Formel (2) sind bekannt oder können auf an sich bekannte Art und Weise hergestellt werden, beispielsweise durch Diazotieren eines Phthalimids der Formel

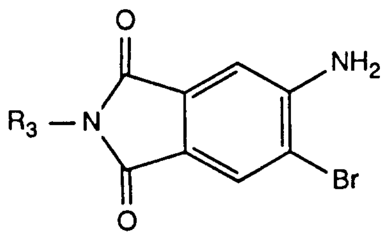

(3)

und Kuppeln mit einer Kupplungskomponente der Formel

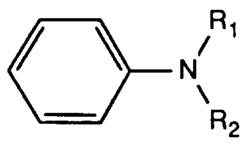

(4)

wobei $R_1$, $R_2$ und $R_3$ die unter der Formel (1) angegebene Bedeutung aufweisen.

Die Verbindungen der Formel (3) und (4) sind bekannt oder können auf an sich bekannte Art hergestellt werden und die Diazotierung und Kupplung erfolgen auf übliche Weise.

Farbstoffe der Formel (1), bei denen $R_1$, $R_2$ oder $R_3$ einen Rest der Formel -Alkylen-X-Alkyl bedeutet, können auch hergestellt werden, indem man zunächst einen Farbstoff, enthaltend eine Vorstufe dieser Reste, z.B. eine Hydroxyalkylgruppe, herstellt und anschliessend diese Gruppe in einen Rest der Formel Alkylen-X-Alkyl überführt.

Die erfindungsgemässen Verbindungen der Formel (1) können als Farbstoffe zum Färben und Bedrukken von halbsynthetischen und insbesondere synthetischen hydrophoben Fasermaterialien, vor allem Textilmaterialien, verwendet werden. Textilmaterialien aus Mischgeweben, die derartige halbsynthetische bzw. synthetische hydrophobe Textilmaterialien enthalten, können ebenfalls mit Hilfe der erfindungsgemässen Verbindungen gefärbt oder bedruckt werden.

Als halbsynthetische Textilmaterialien kommen vor allem Cellulose $2\frac{1}{2}$-Acetat und Cellulosetriacetat in Frage.

Synthetische hydrophobe Textilmaterialien bestehen vor allem aus linearen, aromatischen Polyestern, beispielsweise solchen aus Terephthalsäure und Glykolen, besonders Ethylenglykol oder Kondensationsprodukten aus Terephthalsäure und 1,4-Bis-(hydroxymethyl)-cyclohexan; aus Polycarbonaten, z.B. solchen aus $\alpha,\alpha$-Dimethyl-4,4'-dihydroxy-diphenylmethan und Phosgen, aus Fasern auf Polyvinylchlorid- sowie Polyamid-Basis.

Die Applikation der erfindungsgemässen Verbindungen auf die Textilmaterialien erfolgt nach bekannten Färbeverfahren. Beispielsweise färbt man Polyesterfasermaterialien im Ausziehverfahren aus wässriger Dispersion in Gegenwart von üblichen anionischen oder nicht-ionischen Dispergiermitteln und gegebenenfalls üblichen Quellmitteln (Carrier) bei Temperaturen zwischen 80 und 140 °C. Cellulose-$2\frac{1}{2}$-acetat färbt man vorzugsweise zwischen ungefähr 65 bis 85 °C und Cellulosetriacetat bei Temperaturen bis zu 115 °C.

Die neuen Farbstoffe färben im Färbebad gleichzeitig anwesende Wolle und Baumwolle nicht oder nur wenig an (sehr gute Reserve), so dass sie auch gut zum Färben von Polyester/Wolle- und Polyester/Cellulosefaser-Mischgeweben verwendet werden können.

Die erfindungsgemässen Farbstoffe eignen sich zum Färben nach dem Thermosol-Verfahren, im Ausziehverfahren und für Druckverfahren.

Das genannte Textilmaterial kann dabei in den verschiedenen Verarbeitungsformen vorliegen, wie z.B. als Faser, Faden oder Vlies, als Gewebe oder Gewirke.

Es ist vorteilhaft, die erfindungsgemässen Farbstoffe vor ihrer Verwendung in ein Farbstoffpräparat zu überführen. Hierzu wird der Farbstoff vermahlen, so dass seine Teilchengrösse im Mittel zwischen $0{,}1 \cdot 10^{-6}$ m (0,1 Mikron) und $10 \cdot 10^{-6}$ m (10 Mikron) beträgt. Das Vermahlen kann in Gegenwart von

Dispergiermitteln erfolgen. Beispielsweise wird der getrocknete Farbstoff mit einem Dispergiermittel gemahlen oder in Pastenform mit einem Dispergiermittel geknetet und hierauf im Vakuum oder durch Zerstäuben getrocknet. Mit den so erhaltenen Präparaten kann man nach Zugabe von Wasser Druckpasten und Färbebäder herstellen.

Beim Bedrucken wird man die üblichen Verdickungsmittel verwenden, z.B. modifizierte oder nichtmodifizierte natürliche Produkte, beispielsweise Alginate, British-Gummi, Gummi arabicum, Kristallgummi, Johannisbrotkernmehl, Tragant, Carboxymethylcellulose, Hydroxyethylcellulose, Stärke oder synthetische Produkte, beispielsweise Polyacrylamide, Polyacrylsäure oder deren Copolymere oder Polyvinylalkohole.

Die erfindungsgemässen Farbstoffe verleihen den genannten Materialien, vor allem dem Polyestermaterial, egale violette oder rote Farbtöne von sehr guten Gebrauchs-Echtheiten, wie vor allem guter Lichtechtheit, Thermofixier-, Plissier-, Chlor- und Nassechtheit wie Wasser-, Schweiss- und Waschechtheit; die Ausfärbungen sind ferner gekennzeichnet durch sehr gute Reibechtheit. Besonders hervorzuheben ist die gute Thermomigrierechtheit der erhaltenen Färbungen.

Die erfindungsgemässen Farbstoffe können auch gut verwendet werden zur Herstellung von Mischnuancen zusammen mit anderen Farbstoffen. Selbstverständlich können auch Mischungen der erfindungsgemässen Farbstoffe untereinander verwendet werden.

Die vorstehend genannte Verwendung der erfindungsgemässen Azoverbindungen der Formel (1) stellt ebenso einen Gegenstand der vorliegenden Erfindung dar wie ein Verfahren zum Färben oder Bedrucken von halb-synthetischem oder synthetischem hydrophobem Fasermaterial, insbesondere Textilmaterial, das darin besteht, eine oder mehrere Verbindungen der Formel (1) auf das genannte Material aufzubringen oder es in dieses einzuarbeiten. Das genannte hydrophobe Fasermaterial ist vorzugsweise textiles Polyestermaterial. Weitere Substrate, die durch das erfindungsgemässe Verfahren behandelt werden können sowie bevorzugte Verfahrensbedingungen sind vorstehend bei der näheren Erläuterung der Verwendung der erfindungsgemässen Verbindungen zu finden.

Ein weiterer Gegenstand der Erfindung ist das durch das genannte Verfahren gefärbte bzw. bedruckte hydrophobe Fasermaterial, vorzugsweise Polyester-Textilmaterial.

Die erfindungsgemässen Farbstoffe der Formel (1) eignen sich ausserdem für moderne Aufzeichnungsverfahren, wie z.B. Thermotransfer-Printing.

Die folgenden Beispiele veranschaulichen die Erfindung weiter. Teile und Prozente beziehen sich, sofern nicht anders angegeben, auf das Gewicht.

Beispiel 1: Zu einer Vorlage von 100 ml einer Mischung aus 1 Vol.-Teil Propionsäure und 5 Vol.-Teilen Essigsäure werden unter Kühlen insgesamt 60 g konz. Schwefelsäure und 32 g 40%ige Nitrosylschwefelsäure zugetropft. Bei 0-10 °C werden 27 g 4-Amino-5-brom-N-ethyl-phthalimid portionenweise eingetragen und gelöst. Nach Zugabe von weiteren 100 ml der oben angegebenen Säuremischung wird 2 Stunden bei 0-5 °C gerührt. Überschüssige Nitrosylschwefelsäure wird durch Zugabe von ca. 1 g Harnstoff entfernt.

Die erhaltene Diazolösung wird innerhalb 1 Stunde bei 0-10 °C zugetropft zu einer Lösung von 18 g N,N-Bis-(hydroxyethyl)-anilin in 100 ml der oben angegebenen Säuremischung und 20 g Eis. Durch Zugabe von 30%iger Natronlauge wird dabei ein pH-Wert von 3-5 aufrechterhalten. Abfiltrieren, Waschen und Trocknen ergibt 35,5 g rote Kristalle der Verbindung der Formel

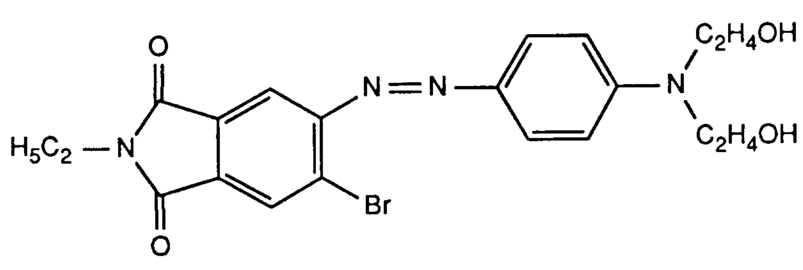

vom Schmelzpunkt 135-140 °C.

Beispiel 2: 32,3 g des im Beispiel 1 beschriebenen Farbstoffs werden in 80 ml Dimethylformamid suspendiert. Nach Zugabe von 9,4 g Kupfer(I)-cyanid wird 2 Stunden bei 100 °C gerührt. Das warme Gemisch wird ausgegossen auf eine Lösung von 38 g Eisen(III)-chlorid-Hexahydrat in 800 ml Eiswasser. Abfiltrieren, Waschen und Trocknen liefert 28 g schwarze Substanz der Verbindung der Formel

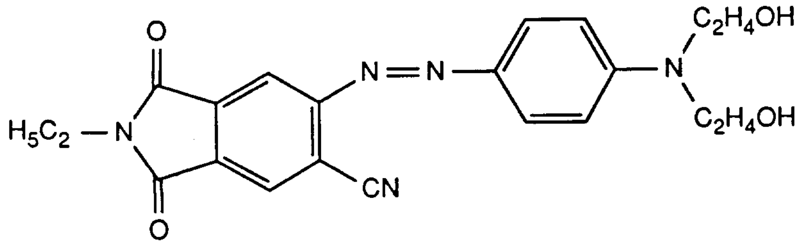

vom Schmelzpunkt 130-160 °C. Zur Reinigung wird das Rohprodukt an Kieselgel mit Aceton als Fliessmittel säulenchromatographisch gereinigt. Man erhält schwarze Kristalle vom Schmelzpunkt 223-225 °C. Der Farbstoff färbt Polyestermaterial blaustichig rot.

Beispiel 3: Auf analoge Weise wie im Beispiel 1 beschrieben werden 27 g 4-Amino-5-brom-N-ethyl-phthalimid diazotiert und gekuppelt auf 26,5 g N,N-Bis-(acetoxyethyl)-anilin.
Man erhält 44,3 g rote Kristalle der Verbindung der Formel

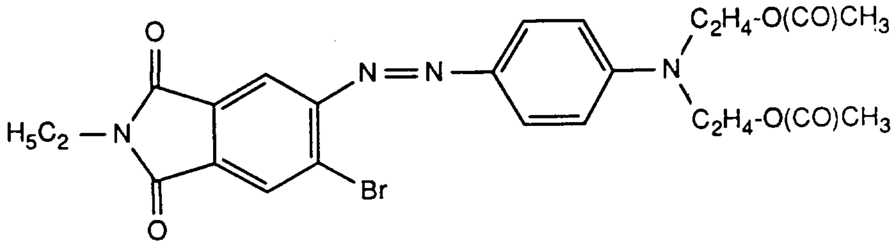

vom Schmelzpunkt 123-128 °C. Zur Reinigung wird das Rohprodukt in 300 ml Ethanol suspendiert und 2 Stunden bei Rückflusstemperatur gerührt. Abfiltrieren (warm), Waschen und Trocknen liefert 31,9 g rote Kristalle vom Schmelzpunkt 136-138 °C.

Beispiel 4: Auf analoge Weise wie im Beispiel 2 beschrieben werden 27,3 g des im Beispiel 3 beschriebenen Farbstoffs umgesetzt mit 6,7 g Kupfer(I)-cyanid. Man erhält 27 g Rohprodukt der Formel

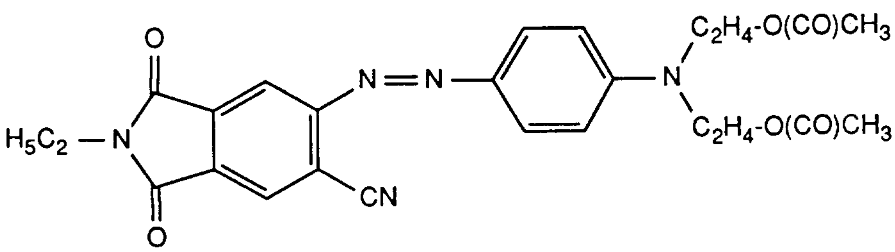

.

Die Reinigung erfolgt wie im Beispiel 3 beschrieben und liefert 17,5 g schwarze Kristalle vom Schmelzpunkt 162-165 °C.
Der Farbstoff färbt Polyestermaterial in roten Farbtönen. Die Färbungen weisen gute Echtheiten, insbesondere eine gute Thermomigrationsechtheit, auf.

Beispiel 5: 2 g des im Beispiel 2 beschriebenen Farbstoffs, 20 ml Pyridin und 3 g Propionsäureanhydrid werden auf 80 °C erwärmt. Nach 2 Stunden Rühren wird das Gemisch ausgegossen auf 200 ml Eiswasser. Filtrieren, Waschen und Trocknen liefert 2,3 g Rohprodukt. Zur Reinigung wird das Rohprodukt 2 Stunden in 20 ml Ethanol bei Rückflusstemperatur gerührt. Filtrieren (warm), Waschen und Trocknen liefert 1,9 g schwarze Kristalle der Verbindung der Formel

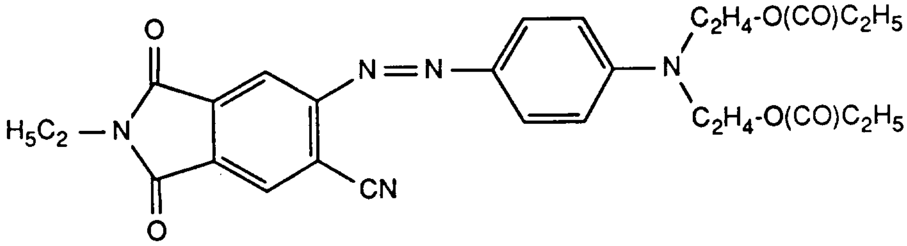

vom Schmelzpunkt 131- 133 °C. Der Farbstoff färbt Polyestermaterial in roten Farbtönen mit guten Echtheiten.

Beispiel 6: 1 g des im Beispiel 2 beschriebenen Farbstoffs werden in 10 ml Pyridin gelöst und bei Raumtemperatur tropfenweise mit 1,1 g Chlorameisensäureethylester versetzt.

Anschliessend wird das Gemisch auf 50 °C erwärmt und auf 150 ml Eiswasser ausgegossen. Abfiltrieren, Waschen und Trocknen liefert 1,1 g rote Kristalle der Verbindung der Formel

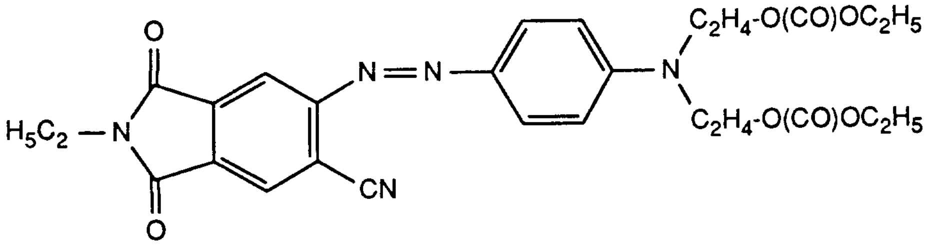

vom Schmelzpunkt 177-179 °C.

Der Farbstoff färbt Polyestermaterial in roten Farbtönen.

Beispiel 7: Arbeitet man wie im Beispiel 1 beschrieben, verwendet jedoch anstelle von 4-Amino-5-brom-N-ethylphthalimid eine äquivalente Menge 4-Amino-5-brom-N-(n-propyl)-phthalimid, so erhält man die Verbindung der Formel

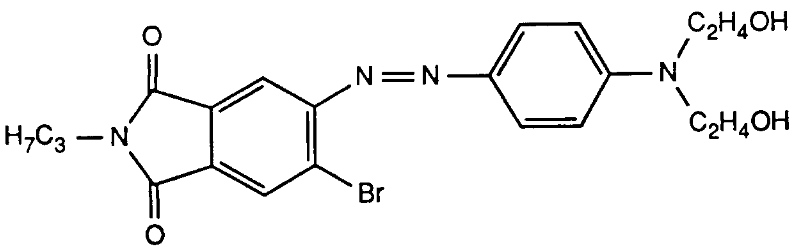

Anschliessend erhält man durch Cyanaustausch gemäss der im Beispiel 2 beschriebenen Arbeitsweise den Farbstoff der Formel

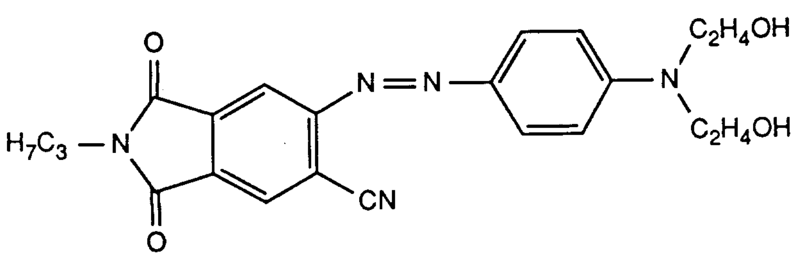

in Form schwarzer Kristalle vom Schmelzpunkt 180 185 °C. Er färbt Polyestergewebe in blaustichig roten Nuancen mit guten Echtheiten.

Beispiel 8: 1 g des gemäss Beispiel 7 hergestellten Farbstoffes werden in 10 ml Dimethylformamid suspendiert und mit 0,1 g Diazabicyclooctan und 0,7 g Butylisocyanat versetzt. Nach 4 Stunden Rühren bei 50 °C wird 1 ml Methanol zugegeben. Nach einer weiteren Stunde bei 50 °C wird das Gemisch auf 100 ml Eiswasser ausgegossen. Durch Abfiltrieren erhält man ein schwarzes Rohprodukt der Formel

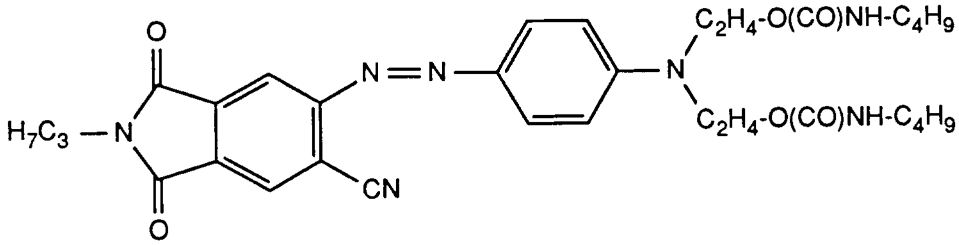

,

welches zur Reinigung mit 10 ml tert.-Butylmethylether versetzt und 2 Stunden bei Rückflusstemperatur gerührt wird. Abfiltrieren, Waschen und Trocknen liefert 0,5 g schwarze Kristalle vom Schmelzpunkt 90-100 °C.

Der Farbstoff färbt Polyestermaterial in roten Farbtönen.

Beispiel 9-17: Auf analoge Weise wie in den Beispielen 2, 4-6 und 8 beschrieben lassen sich die in der folgenden Tabelle aufgeführten Farbstoffe herstellen. Sie färben Textilmaterial aus Polyester in den Farbtönen, die in der letzten Spalte angegeben sind.

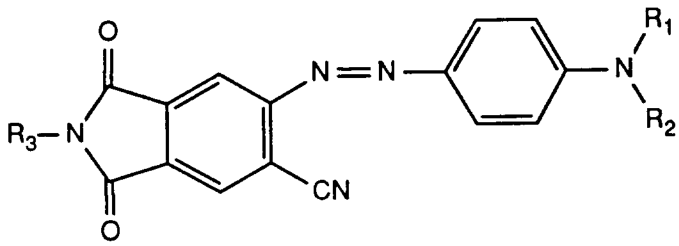

| Bsp. | $R_3$ | $R_2$ | $R_1$ | Nuance auf Polyester |
|---|---|---|---|---|
| 9 | $-C_2H_5$ | $-C_2H_5$ | $-C_2H_4-O-\underset{\underset{O}{\Vert}}{C}-C_2H_5$ | blaustichig rot |
| 10 | $-C_3H_6-O-CH_3$ | $-C_2H_5$ | $-C_2H_4-O-\underset{\underset{O}{\Vert}}{C}-CH_3$ | blaustichig rot |
| 11 | $-C_3H_6-O-CH_3$ | $-C_2H_4-O-\underset{\underset{O}{\Vert}}{C}-CH_3$ | $-C_2H_4-O-\underset{\underset{O}{\Vert}}{C}-CH_3$ | rot |
| 12 | $-C_2H_5$ | $-C_2H_4-O-CH_3$ | $-C_2H_4-O-CH_3$ | blaustichig rot |
| 13 | $-C_3H_6-O-\underset{\underset{O}{\Vert}}{C}-CH_3$ | $-C_2H_4-O-CH_3$ | $-C_2H_4-O-CH_3$ | blaustichig rot |
| 14 | $-C_2H_5$ | $-C_2H_4-\underset{\underset{O}{\Vert}}{C}-O-CH_3$ | $-C_2H_4-\underset{\underset{O}{\Vert}}{C}-O-CH_3$ | rot |
| 15 | $-C_2H_5$ | $-C_2H_4-O-\underset{\underset{O}{\Vert}}{C}-NH-C_2H_4Cl$ | $-C_2H_4-O-\underset{\underset{O}{\Vert}}{C}-NH-C_2H_4Cl$ | blaustichig rot |
| 16 | $-CH_3$ | $-C_2H_4-O-\underset{\underset{O}{\Vert}}{C}-NH-C_4H_9$ | $-C_2H_4-O-\underset{\underset{O}{\Vert}}{C}-NH-C_4H_9$ | blaustichig rot |
| 17 | 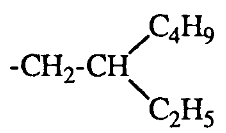 | $-C_2H_4-O-\underset{\underset{O}{\Vert}}{C}-NH-C_4H_9$ | $-C_2H_4-O-\underset{\underset{O}{\Vert}}{C}-NH-C_4H_9$ | blaustichig rot |

Beispiel 18: 1 g des im Beispiel 4 beschriebenen Farbstoffs wird zusammen mit 17 g Wasser und 2 g eines handelsüblichen Dispergators vom Typ Dinaphthylmethandisulfonatin einer Sandmühle gemahlen und in eine 5%ige wässrige Dispersion überführt.

Mit dieser Formulierung wird im HT-Ausziehverfahren bei 130 °C eine 1%ige Färbung (bezogen auf Pigment und Substrat) auf Polyestergewebe erstellt und reduktiv gereinigt. Die so erzielte rote Färbung weist sehr gute Gebrauchsechtheiten und insbesondere eine ausgezeichnete Thermomigrationsechtheit auf.

Dieselben guten Echtheiten lassen sich erzielen, wenn damit Polyestergewebe im Thermosolverfahren gefärbt wird (10 g/l Farbstoff, Flottenaufnahme 50 %, Fixiertemperatur 210 °C).

Zur Prüfung der Thermomigrationsechtheit wird das gefärbte Gewebe mit einem Textil-Weichmacher vom Typ Distearyl-diethylentriamin ausgerüstet und anschliessend während 40 Sekunden auf 165 °C erhitzt. Danach werden Reibechtheit und Waschechtheit (60 °C) der Probe geprüft.

Beispiel 19:

6,75 g des im Beispiel 3 beschriebenen bromhaltigen Farbstoffs,
75 ml n-Butylacetat,
26 ml Formamid,
2,5 g Kupfer(II)acetat,
6,25 g wasserfreies Natriumacetat und
5 ml Acetanhydrid werden bei 110 °C gerührt. Nach 1 Stunde werden nochmals
2,5 ml Acetanhydrid zugegeben. Nach weiteren 4 Stunden Rühren bei 110 °C wird das Gemisch abgekühlt und mit
250 ml Wasser versetzt. Abfiltrieren und trocknen ergibt 3,7 g des im Beispiel 4 beschriebenen cyanhaltigen Farbstoffs.

Beispiel 20: Auf analoge Weise wie in den Beispielen 2, 4-6, 8 und 19 beschrieben erhält man den Farbstoff der Formel

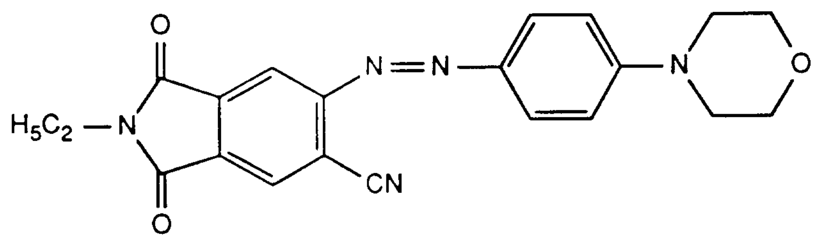

als rotes Pulver vom Schmelzpunkt 229-232 °C. Der Farbstoff färbt Polyestermaterial in roten Farbtönen.

Beispiel 21:

2 g des im Beispiel 2 beschriebenen Farbstoffs in

10 ml Pyridin werden tropfenweise mit einer Mischung aus 0,6 g Acetanhydrid und 0,8 g Propionsäureanhydrid versetzt. Nach 2 Stunden Rühren bei 80 °C wird auf Eiswasser ausgegossen und abfiltriert. Das Rohprodukt wird zu 10 ml Ethanol gegeben und 1 Stunde bei Rückflusstemperatur gerührt. Abkühlen, Abfiltrieren und Trocknen ergibt 2 g schwarze Kristalle vom Schmelzpunkt 120-128 °C. Es handelt sich um eine Mischung der folgenden Farbstoffe:

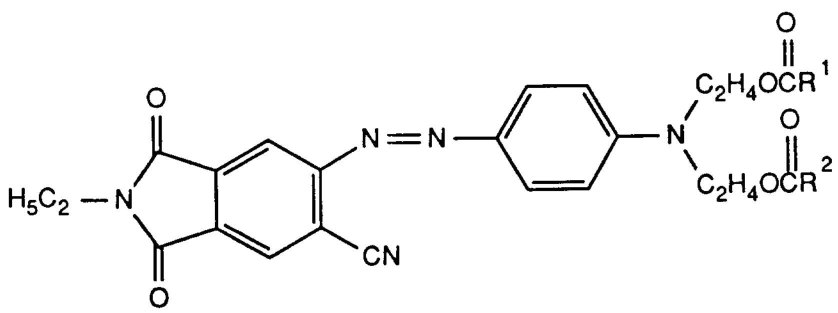

$R^1 = R^2 = -CH_3$ (1 Teil)
$R^1 = R^2 = -C_2H_5$ (1 Teil)
$R^1 = -CH_3$, $R^2 = -C_2H_5$ (2 Teile)

Die Mischung färbt Polyestermaterial in roten Farbtönen.

Beispiele 22-58: Auf analoge Art wie in den Beispielen 2, 4-6, 8 und 19 beschrieben lassen sich die in der folgenden Tabelle aufgeführten Farbstoffe herstellen. Sie färben Textilmaterial aus Polyester in den Farbtönen, die in der letzten Spalte angegeben sind.

| Bsp. | $R_3$ | $R_2$ | $R_1$ | Nuance auf Polyester |
|---|---|---|---|---|
| 22 | $-C_2H_5$ | $-C_2H_5$ | $-CH_2CH(OH)CH_2OH$ | Rubin |
| 23 | $-CH_3$ | $-C_2H_4OCOCH_3$ | $-C_2H_4OCOCH_3$ | Rot |
| 24 | $-C_2H_5$ | $-C_2H_5$ | $-C_2H_4OH$ | Blaust. Rot |
| 25 | $-C_3H_7$ | $-C_2H_4OCOCH_3$ | $-C_2H_4OCOCH_3$ | Rot |
| 26 | $-CH_2CH(C_2H_5)C_4H_9$ | $-C_2H_4OCOCH_3$ | $-C_2H_4OCOCH_3$ | Rot |
| 27 | $-C_3H_6OCH_3$ | $-C_2H_4OH$ | $-C_2H_4OH$ | Blaust. Rot |
| 28 | $-C_3H_6OCH_3$ | $-C_2H_5$ | $-C_2H_4OH$ | Bordeaux |
| 29 | $-C_2H_5$ | $-C_2H_5$ | $-C_2H_4OCOC_6H_5$ | Bordeaux |
| 30 | $-C_2H_5$ | $-C_2H_4OCOC_6H_5$ | $-C_2H_4OCOC_6H_5$ | Rot |
| 31 | $-C_2H_5$ | $-C_2H_5$ | $-C_2H_4OCONHC_4H_9$ | Blaust. Rot |
| 32 | $-C_2H_5$ | $-C_2H_5$ | $-C_2H_4OCONHC_6H_5$ | Blaust. Rot |
| 33 | $-C_2H_5$ | $-C_2H_5$ | $-C_2H_4OCOCH_3$ | Blaust. Rot |
| 34 | $-C_2H_5$ | $-C_2H_5$ | $-C_2H_4OCOCH(CH_3)CH_3$ | Blaust. Rot |
| 35 | $-C_2H_5$ | $-C_2H_5$ | $-C_2H_4OCOCH_2CH(CH_3)CH_3$ | Blaust. Rot |
| 36 | $-C_2H_5$ | $-C_2H_4OCOCH(CH_3)CH_3$ | $-C_2H_4OCOCH(CH_3)CH_3$ | Rot |
| 37 | $-C_2H_5$ | $-C_2H_4OCOC_3H_7$ | $-C_2H_4OCOC_3H_7$ | Rot |
| 38 | $-C_2H_5$ | $-C_2H_4OCH_3$ | $-C_2H_4OCH_3$ | Blaust. Rot |

| Bsp. | $R_3$ | $R_2$ | $R_1$ | Nuance auf Polyester |
|---|---|---|---|---|
| 39 | $-CH_3$ | $-C_2H_5$ | $-C_2H_4O\overset{\overset{O}{\|}}{C}OC_2H_5$ | Blaust. Rot |
| 40 | $-C_2H_4\overset{\overset{O}{\|}}{C}OCH_3$ | $-C_2H_5$ | $-C_2H_4O\overset{\overset{O}{\|}}{C}CH_3$ | Blaust. Rot |
| 41 | $-C_2H_4OCH_3$ | $-C_2H_5$ | $-C_2H_4OC_2H_5$ | Blaust. Rot |
| 42 | $-C_2H_4OCH_3$ | $-C_2H_4O\overset{\overset{O}{\|}}{C}CH_3$ | $-C_2H_4O\overset{\overset{O}{\|}}{C}CH_3$ | Rot |
| 43 | $-C_3H_6O\overset{\overset{O}{\|}}{C}CH_3$ | $-CH_3$ | $-C_2H_4O\overset{\overset{O}{\|}}{C}CH_3$ | Blaust. Rot |
| 44 | $-C_3H_6O\overset{\overset{O}{\|}}{C}NHC_6H_5$ | $-CH_3$ | $-C_2H_4O\overset{\overset{O}{\|}}{C}NHC_4H_9$ | Blaust. Rot |
| 45 | $-C_4H_9$ | $-C_2H_4\overset{\overset{O}{\|}}{C}OCH_3$ | $-C_2H_4O\overset{\overset{O}{\|}}{C}CH_3$ | Rot |
| 46 | $-C_3H_7$ | $-CH_3$ | $-C_2H_4OCH_3$ | Blaust. Rot |
| 47 | $-CH_3$ | $-C_2H_4O\overset{\overset{O}{\|}}{C}CH_3$ | $-C_2H_4OC_2H_5$ | Blaust. Rot |
| 48 | $-C_2H_4OCH_3$ | $-C_2H_4\overset{\overset{O}{\|}}{C}OC_2H_5$ | $-C_2H_4\overset{\overset{O}{\|}}{C}OC_2H_5$ | Rot |
| 49 | $-C_2H_4\overset{\overset{O}{\|}}{C}OC_2H_5$ | $-C_2H_4OCH_3$ | $-C_2H_4OCH_3$ | Blaust. Rot |
| 50 | $-C_2H_4\overset{\overset{O}{\|}}{C}OC_2H_5$ | $-C_2H_4O\overset{\overset{O}{\|}}{C}C_2H_5$ | $-C_2H_4O\overset{\overset{O}{\|}}{C}C_2H_5$ | Rot |
| 51 | $-C_2H_4O\overset{\overset{O}{\|}}{C}OC_2H_5$ | $-C_4H_9$ | $-C_2H_4O\overset{\overset{O}{\|}}{C}OC_2H_5$ | Bordeaux |
| 52 | $-C_3H_6O\overset{\overset{O}{\|}}{C}CH_3$ | $-C_2H_4O\overset{\overset{O}{\|}}{C}CH_3$ | $-C_2H_4O\overset{\overset{O}{\|}}{C}CH_3$ | Rot |
| 53 | $-C_2H_4O\overset{\overset{O}{\|}}{C}OC_2H_5$ | $-C_3H_7$ | $-C_2H_4OC_2H_5$ | Rubin |
| 54 | $-C_2H_4OCH_3$ | $-C_2H_4OCH_3$ | $-C_2H_4OCH_3$ | Blaust. Rot |
| 55 | $-C_2H_4O\overset{\overset{O}{\|}}{C}NHC_4H_9$ | $-C_2H_4\overset{\overset{O}{\|}}{C}OC_2H_5$ | $-C_2H_4O\overset{\overset{O}{\|}}{C}C_2H_5$ | Rot |

| Bsp. | $R_3$ | $R_2$ | $R_1$ | Nuance auf Polyester |
|---|---|---|---|---|
| 56 | $-C_2H_4O\overset{\overset{O}{\|}}{C}OCH_3$ | $-C_2H_4O\overset{\overset{O}{\|}}{C}OCH_3$ | $-C_2H_4O\overset{\overset{O}{\|}}{C}OCH_3$ | Rot |
| 57 | $-C_2H_5$ | $-C_2H_5$ | $-C_2H_4\overset{\overset{O}{\|}}{C}OC_2H_5$ | Rot |
| 58 | $-C_2H_4O\overset{\overset{O}{\|}}{C}CH_3$ | $-CH_3$ | $-C_2H_4\overset{\overset{O}{\|}}{C}OCH_3$ | Rot |

## Patentansprüche

1. Farbstoffe der Formel

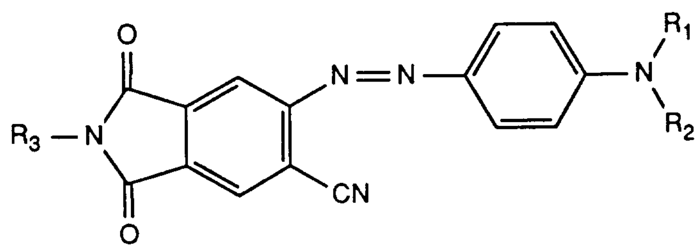

(1)

worin

$R_1$ einen $C_2$-$C_8$-Alkylrest bedeutet, der durch Hydroxy, Halogen, einen Rest-X-$C_1$-$C_8$-Alkyl oder -X-Phenyl substituiert ist, wobei X ein Brückenglied der Formel -O-,

$$-O-\underset{\underset{O}{\|}}{C}- \ , \ -O-\underset{\underset{O}{\|}}{C}-O- \ , \ -\underset{\underset{O}{\|}}{C}-O- \ \text{oder} \ -O-\underset{\underset{O}{\|}}{C}-NH-$$

ist, und

$R_2$ und $R_3$ unabhängig voneinander je einen unsubstituierten $C_1$-$C_8$-Alkylrest oder einen $C_2$-$C_8$-Alkylrest, der wie für $R_1$ angegeben substituiert ist, bedeuten oder worin

$R_1$ und $R_2$ zusammen mit dem sie verbindenden Stickstoffatom einen heterocyclischen R est darstellen.

2. Farbstoffe gemäss Anspruch 1, worin $R_1$ einen $C_2$-$C_4$-Alkylrest bedeutet, der durch Hydroxy, Chlor oder einen Rest -X-$C_1$-$C_4$-Alkyl substituiert ist, wobei X ein Brückenglied der Formel -O-,

$$-O-\underset{\underset{O}{\|}}{C}- \ , \ -O-\underset{\underset{O}{\|}}{C}-O- \ \text{oder} \ -\underset{\underset{O}{\|}}{C}-O-$$

ist.

3. Farbstoffe gemäss Anspruch 2, worin X ein Brückenglied der Formel

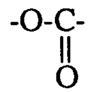 oder 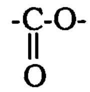

ist.

4. Farbstoffe gemäss einem der Ansprüche 1 bis 3, worin $R_2$ einen unsubstituierten $C_1$-$C_4$-Alkylrest oder einen $C_2$-$C_4$-Alkylrest bedeutet, der durch Hydroxy, Chlor oder einen Rest -X-$C_1$-$C_4$-Alkyl substituiert ist, wobei X ein Brückenglied der Formel -O-,

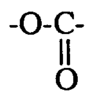 , 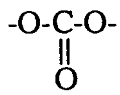 oder 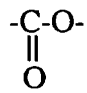

ist.

5. Farbstoffe gemäss einem der Ansprüche 1 bis 4, worin $R_2$ Methyl, Ethyl, Hydroxyethyl oder $C_2$-$C_4$-Alkyl bedeutet, das durch einen Rest -X-$C_1$-$C_4$-Alkyl substituiert ist, worin X ein Brückenglied der Formel

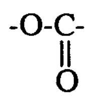 oder 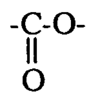

ist.

6. Farbstoffe gemäss einem der Ansprüche 1 bis 5, worin $R_3$ einen unsubstituierten $C_1$-$C_4$-Alkylrest oder einen $C_2$-$C_4$-Alkylrest bedeutet, der durch Hydroxy, Chlor oder einen Rest -X-$C_1$-$C_4$-Alkyl substituiert ist, wobei X ein Brückenglied der Formel -O-,

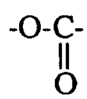 , 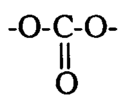 oder 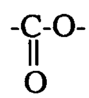

ist.

7. Farbstoffe gemäss einem der Ansprüche 1 bis 6, worin $R_3$ Methyl, Ethyl, Hydroxyethyl oder $C_2$-$C_4$-Alkyl bedeutet, das durch einen Rest -X-$C_1$-$C_4$-Alkyl substituiert ist, worin X ein Brückenglied der Formel

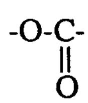 oder 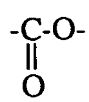

ist.

8. Farbstoffe gemäss einem der Ansprüche 1 bis 7, worin $R_1$ einen $C_2$-$C_4$-Alkylrest bedeutet, der durch Hydroxy, Chlor oder einen Rest -X-$C_1$-$C_4$-Alkyl substituiert ist, wobei X ein Brückenglied der Formel -O-,

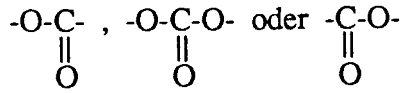

ist und $R_2$ und $R_3$ unabhängig voneinander je Methyl, Ethyl, Hydroxyethyl oder $C_2$-$C_4$-Alkyl bedeutet, das durch einen Rest -X-$C_1$-$C_4$-Alkyl substituiert ist, worin X ein Brückenglied der Formel

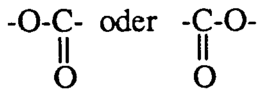

ist.

9. Verfahren zur Herstellung der Farbstoffe gemäss Anspruch 1, dadurch gekennzeichnet, dass man in einer Verbindung der Formel

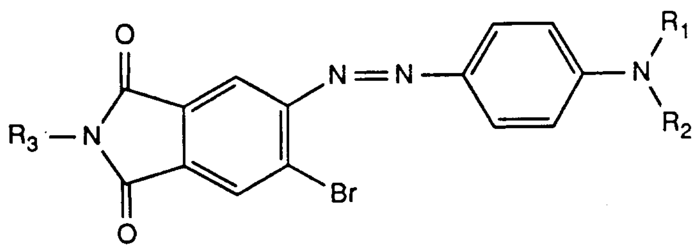

(2)

worin $R_1$, $R_2$ und $R_3$ die unter der Formel (1) angegebenen Bedeutungen aufweisen, Br gegen CN austauscht.

10. Verwendung der Dispersionsfarbstoffe gemäss Anspruch 1 zum Färben oder Bedrucken von halbsynthetischem oder synthetischem hydrophobem Fasermaterial, insbesondere Textilmaterial.

11. Verwendung nach Anspruch 10 zum Färben oder Bedrucken von Textilmaterial aus Polyesterfasern.

12. Verfahren zum Färben oder Bedrucken von halbsynthetischem oder synthetischem hydrophobem Fasermaterial, insbesondere Textilmaterial, dadurch gekennzeichnet, dass man eine oder mehrere der im Anspruch 1 definierten Verbindungen auf das genannte Material aufbringt oder diesem einverleibt.

13. Verfahren nach Anspruch 12, worin das hydrophobe Fasermaterial, vorzugsweise Textilmaterial, aus Polyesterfasern besteht.

14. Das gemäss Anspruch 12 oder 13 gefärbte oder bedruckte Material.

## Claims

1. A dye of the formula

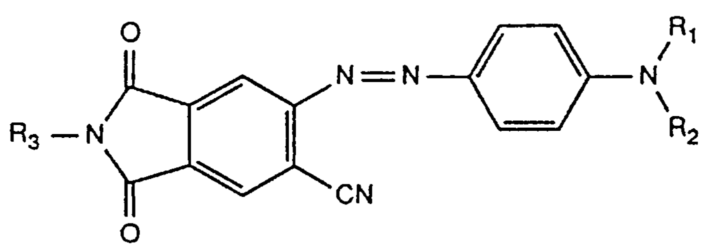

(1)

in which $R_1$ is a $C_2$-$C_8$alkyl radical which is substituted by hydroxyl, halogen, a radical -X-$C_1$-$C_8$alkyl or -X-phenyl, in which X is a bridging member of the formula -O-,

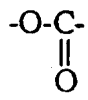 , 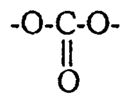 , 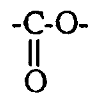 or 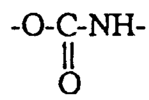

and $R_2$ and $R_3$, independently of one another, are each an unsubstituted $C_1$-$C_8$alkyl radical or a $C_2$-$C_8$alkyl radical which is substituted as mentioned for $R_1$, or in which $R_1$ and $R_2$ together with the nitrogen atom linking them are a heterocyclic radical.

**2.** A dye according to claim 1, in which $R_1$ is a $C_2$-$C_4$alkyl radical which is substituted by hydroxyl, chlorine or a radical -X-$C_1$-$C_4$alkyl, in which X is a bridging member of the formula -O-,

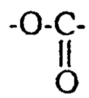 , 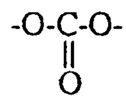 or 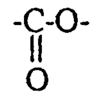 .

**3.** A dye according to claim 2, in which X is a bridging member of the formula

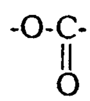 or 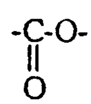 .

**4.** A dye according to any one of claims 1 to 3, in which $R_2$ is an unsubstituted $C_1$-$C_4$alkyl radical or a $C_2$-$C_4$alkyl radical which is substituted by hydroxyl, chlorine or a radical -X-$C_1$-$C_4$alkyl, in which X is a bridging member of the formula -O-,

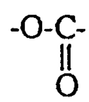 , 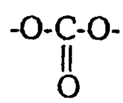 or 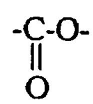 .

**5.** A dye according to any one of claims 1 to 4, in which $R_2$ is methyl, ethyl, hydroxyethyl or $C_2$-$C_4$alkyl which is substituted by a radical -X-$C_1$-$C_4$alkyl, in which X is a bridging member of the formula

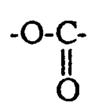 or 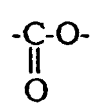 .

**6.** A dye according to any one of claims 1 to 5, in which $R_3$ is an unsubstituted $C_1$-$C_4$alkyl radical or a $C_2$-$C_4$alkyl radical which is substituted by hydroxyl, chlorine or a radical -X-$C_1$-$C_4$alkyl, in which X is a bridging member of the formula -O-,

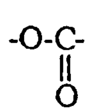 , 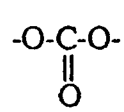 or 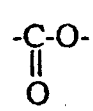 .

7. A dye according to any one of claims 1 to 6, in which $R_3$ is methyl, ethyl, hydroxyethyl or $C_2$-$C_4$alkyl which is substituted by a radical -X-$C_1$-$C_4$alkyl, in which X is a bridging member of the formula

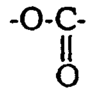 or 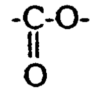 .

8. A dye according to any one of claims 1 to 7, in which $R_1$ is a $C_2$-$C_4$alkyl radical which is substituted by hydroxyl, chlorine or a radical -X-$C_1$-$C_4$alkyl, in which X is a bridging member of the formula -O-,

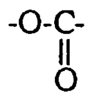 , 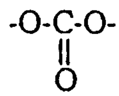 or 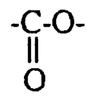

and $R_2$ and $R_3$, independently of one another, are each methyl, ethyl, hydroxyethyl or $C_2$-$C_4$alkyl which is substituted by a radical -X-$C_1$-$C_4$alkyl, in which X is a bridging member of the formula

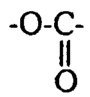 or 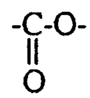 .

9. A process for the preparation of a dye according to claim 1, which comprises exchanging, in a compound of the formula

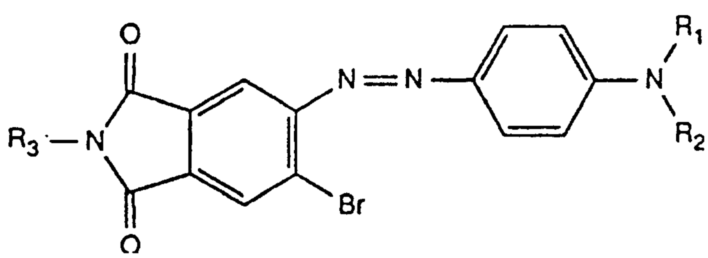 (2)

in which $R_1$, $R_2$ and $R_3$ are as defined under the formula (1), Br for CN.

10. Use of a disperse dye according to claim 1 for the dyeing or printing of semisynthetic or synthetic hydrophobic fibre material, in particular textile material.

11. Use according to claim 10 for the dyeing or printing of polyester fibre textile material.

12. A process for the dyeing or printing of semisynthetic or synthetic hydrophobic fibre material, in particular textile material, which comprises applying one or more of the compounds defined in claim 1 to the material mentioned or incorporating it/them therein.

13. A process according to claim 12, in which the hydrophobic fibre material, preferably textile material, comprises polyester fibres.

14. A material dyed or printed according to claim 12 or 13.

## Revendications

1. Colorants de formule

(1) 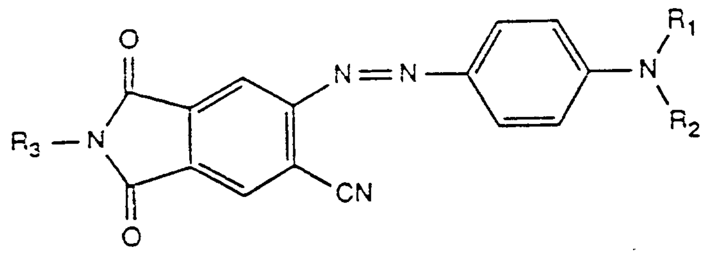

dans laquelle

$R_1$ représente un résidu alkyle en $C_{2-8}$ substitué par un groupe hydroxy, un atome d'halogène, un résidu X-(alkyle en $C_{1-8}$), ou X-phényle, X étant un chaînon pontant de formule -O-, -O-C(O)-, -O-C(O)-O-, -C(O)-O ou -O-C(O)-NH-, et

$R_2$ et $R_3$ représentent indépendamment un groupe alkyle en $C_{1-8}$ non substitué ou un groupe alkyle en $C_{2-8}$ substitué par les mêmes résidus que $R_1$, ou

$R_1$ et $R_2$ forment ensemble avec l'atome d'azote auquel ils sont liés un résidu hétérocyclique.

2. Colorants conformes à la revendication 1 dans lesquels $R_1$ représente un résidu alkyle en $C_{2-4}$ substitué par un groupe hydroxy, un atome de chlore ou un résidu X-(alkyle en $C_{1-4}$), X étant un chaînon pontant de formule - O-, -O-C(O)-, -O-C(O)-O- ou -C(O)-O.

3. Colorants conformes à la revendication 2 dans lesquels X est un chaînon pontant de formule -C(O)-O- ou -O-C(O)-.

4. Colorants conformes à une des revendications 1 à 3 dans lesquels $R_2$ représente un groupe alkyle en $C_{1-4}$ non substitué ou un groupe alkyle en $C_{2-4}$ substitué par un groupe hydroxy, un atome de chlore ou un résidu X-(alkyle en $C_{1-4}$), X étant un chaînon pontant de formule -O-, -O-C(O)-, -O-C(O)-O-ou -C-(O)-O.

5. Colorants conformes à une des revendications 1 à 4 dans lesquels $R_2$ représente un groupe méthyle, éthyle, hydroxyéthyle ou un groupe alkyle en $C_{2-4}$ substitué par un résidu X-(alkyle en $C_{1-4}$), X étant un chaînon pontant de formule -O-C(O)- ou -C(O)-O.

6. Colorants conformes à une des revendications 1 à 5 dans lesquels $R_3$représente un groupe alkyle en $C_{1-4}$ non substitué ou un groupe alkyle en $C_{2-4}$ substitué par un groupe hydroxy, un atome de chlore ou un résidu X-(alkyle en $C_{1-4}$), X étant un chaînon pontant de formule -O-, -O-C(O)-, -O-C(O)-O-ou -C-(O)-O.

7. Colorants conformes à une des revendications 1 à 6 dans lesquels $R_3$ représente un groupe méthyle, éthyle, hydroxyéthyle ou un groupe alkyle en $C_{2-4}$ substitué par un résidu X-(alkyle en $C_{1-4}$), X étant un chaînon pontant de formule -O-C(O)- ou -C(O)-O.

8. Colorants conformes à une des revendications 1 à 7 dans lesquels $R_1$ représente un résidu alkyle en $C_{2-4}$ substitué par un groupe hydroxy, un atome de chlore ou un résidu X-(alkyle en $C_{1-4}$), X étant un chaînon pontant de formule -O-, -O-C(O)-, -O-C(O)-O- ou -C(O)-O, et dans laquelle $R_2$ et $R_3$ représente indépendamment un groupe méthyle, éthyle, hydroxyéthyle ou un groupe alkyle en $C_{2-4}$ substitué par un résidu X-(alkyle en $C_{1-4}$), X étant un chaînon pontant de formule -O-C(O)- ou -C(O)-O.

9. Procédé de préparation des colorants conformes à la revendication 1, caractérisé en ce que l'on effectue, dans un composé de formule

(2) 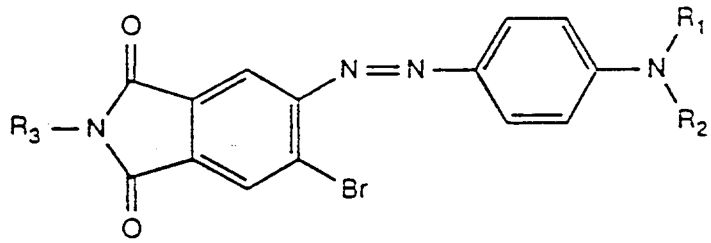

dans laquelle $R_1$, $R_2$ et $R_3$ ont la signification indiquée pour la formule (1), un échange de l'atome de brome contre un groupe CN.

**10.** Utilisation des colorants de dispersion conformes à la revendication 1 pour la teinture ou l'impression de matériaux fibreux, en particulier textiles, hydrophobes synthétiques ou semi-synthétiques.

**11.** Utilisation conforme à la revendication 10 pour la teinture ou l'impression de matériaux textiles en polyester.

**12.** Procédé pour la teinture ou l'impression de matériaux fibreux hydrophobes synthétiques ou semi-synthétiques, en particulier de matériaux textiles, caractérisé en ce que l'on applique sur ou incorpore dans le matériau indiqué un ou plusieurs des composés définis dans la revendication 1.

**13.** Procédé conforme à la revendication 12 dans lequel le matériau fibreux, en particulier un matériau textile, est composé de fibres de polyester.

**14.** Matériau teint ou imprimé selon la revendication 12 ou 13.